# EUROPÄISCHE PATENTSCHRIFT

(11) **EP 3 167 975 B1**
(45) Veröffentlichungstag und Bekanntmachung des Hinweises auf die Patenterteilung: **25.09.2019**
(21) Anmeldenummer: 16198520.5
(22) Anmeldetag: 11.11.2016
(51) Int. Cl.: B22D 11/14, C21C 5/00, B21B 37/00, G06F 17/00

(54) **ANLAGE DER HÜTTEN-, WALZWERKS-, SCHMIEDE- ODER ROHRINDUSTRIE SOWIE VERFAHREN ZU DEREN BETRIEB**
INSTALLATION USED IN THE METALLURGY, ROLLING, SMITHING OR PIPING INDUSTRY AND METHOD FOR THE OPERATION THEREOF
INSTALLATION DE L'INDUSTRIE DE LA MÉTALLURGIE, DU LAMINAGE, DE LA FONDERIE OU DE LA TUYAUTERIE ET PROCÉDÉ DE FONCTIONNEMENT

(30) Priorität: 13.11.2015 DE 102015222476
(43) Veröffentlichungstag der Anmeldung: 17.05.2017
(73) Patentinhaber: SMS group GmbH, 40237 Düsseldorf (DE)
(72) Erfinder: Plociennik, Christian, 40878 Ratingen (DE); Reifferscheid, Markus, 41352 Korschenbroich (DE)
(74) Vertreter: Klüppel, Walter

(56) Entgegenhaltungen:
- WO-A1-2010/057656
- ABB: "Connecting the world - Industry 4.0", ABB Contact 3/14 The customer magazine of ABB in India, Middle East and Africa , 2014, XP002767901, Gefunden im Internet: URL:http://new.abb.com/docs/librariesprovi der20/Contact-magazine/contact_middle-east -industry-4-0-dec2014.pdf [gefunden am 2017-02-09]
- DFKI: "DFKI auf der CeBIT 2015, Smart Factory-Smart Data-Smart Services,digisign-Gewinner beim CeBIT Award", NEWS DEUTSCHES FORSCHUNGSZENTRUM FÜR KÜNSTLICHE INTELLIGENZ, Nr. 35, März 2015 (2015-03), XP002767902, ISSN: 2196-2251
- KRUMEICH JULIAN ET AL: "Advanced planning and control of manufacturing processes in steel industry through big data analytics: Case study and architecture proposal", 2014 IEEE INTERNATIONAL CONFERENCE ON BIG DATA (BIG DATA), IEEE, 27. Oktober 2014 (2014-10-27), Seiten 16-24, XP032717191, DOI: 10.1109/BIGDATA.2014.7004408 [gefunden am 2015-01-07]
- R. Schmitt: "Cyber Physical Production Systems: Ohne Sensorik keine Industrie 4.0", ITG/GMA Fachtagung Nürnberg , 4. Juni 2014 (2014-06-04), XP002767903, Gefunden im Internet: URL:http://spectronet.de/story_docs/vortra ege_2014/140603_sensor_test/140604_Schmitt _rwth_aachen.pdf [gefunden am 2017-02-09]
- Welt N24: "Vernetzte Strukturen und das Ende der Ineffizienz", Stahl Report Industrie 4.0 , 12. November 2015 (2015-11-12), XP002767904, Gefunden im Internet: URL:https://www.welt.de/148736402 [gefunden am 2017-02-09]
- CAILIAN CHEN, JING YAN, NING LU, YIYIN WANG, XINPING GUAN: "Ubiquitous Monitoring for Industrial Cyber-Physical Systems Over Relay-Assisted Wireless Sensor Networks", IEEE TRANSACTIONS ON EMERGING TOPICS IN COMPUTING, Bd. 3, Nr. 3, 4. September 2015 (2015-09-04), XP002767905,

## Beschreibung

Die Erfindung betrifft eine Anlage der Hütten- oder Walzwerksindustrie oder der Schmiede- oder Rohrindustrie mit Werkzeugen. Darüber hinaus betrifft die Erfindung ein Verfahren für den Betrieb einer solchen Anlage.

Die Erfindung zielt darauf ab, manuelle Bestandsführungen von Werkzeugen bzw. der Werkzeugverwaltung für Maschinen innerhalb von Anlagen der Hütten- und Walzwerkindustrie sowie der Schmiede- und Rohrindustrie, durch spezielle, mobile Datenerfassung unter Nutzung von Industrie 4.0-Technologien, wie z. B.
- am den Werkzeugen integrierten kommunikationsfähigen Sensoren zur Generierung von Betriebs- und Zustandsdaten, wie Orte- und Lageveränderungen und Zustandserfassung (Demontiert, Nachbearbeitet, Standzeitkontrolle, ...) der Werkzeuge
- Verwendung von speziellen "smart Labels" als digitalen Objektgedächtnissen (Digital Object Memory, DOM) der Werkzeuge
zu ersetzen.

### Ziel:

Das Ziel ist, beim Werkzeugwechsel die optimale Werkzeugauswahl für die jeweils aktuelle Fertigungsaufgabe (zu bewältigende Gieß- oder Walzaufgabe) zu finden und einzusetzen.
Beim Stranggießen bedeutet dies, die optimale Auswahl und Kombination der Kokillenkomponenten (Werkzeugeinzelteile) bzw. der daraus zusammengebauten Stranggieß-Kokille (sogen. Komplett-Werkzeug), auszuwählen und aufzufinden. Beim Walzenwechsel bedeutet dies, die optimale Kombination der verfügbaren Arbeitswalzen zu finden und einzusetzen. Dabei muss der Einsatz von Ausschusswerkzeugen (Walzen, Kokillen, etc.) verhindert werden.
Des Weiteren soll eine Verfolgung über den Lebenszyklus der Werkzeuge ermöglicht werden ("Lebenslaufakte"), um beispielsweise Nachbearbeitungsergebnisse und Einsatzzeiten der Werkzeuge eindeutig zuzuordnen.

Einzelziele sind:
- Werkzeuge lassen sich schneller und effektiver lokal finden ("Finden statt Suchen")
- fehlerkritische Werkzeuge können schnell identifiziert werden ("Digitaler Lebenslauf", "Lebenslaufakte")
- Übersicht über die verfügbaren Werkzeugen u. deren Dimensionen (opt. Werkz.-auswahl)
- durch automatische Erfassung keine händische Fehleingaben mehr möglich
- Vorhersagen zu möglichen Engpässen in der Werkzeugverfügbarkeit sind möglich (durch den direkten Abgleich mit den für den Produktionsplan erforderlichen Werkzeugen und ggf. Anpassung des Produktionsplanes gemäß aktuellen Werkzeugverfügbarkeit)

Erreichbare Vorteile:
- Verbesserung der erzielten Produktqualität (Reduzierung der Rissrate, ...)
- Reduzierung von Produktionsschrott (hervorgerufen durch einen Kokillenwechsel, welche die falschen Kokillenplatten enthält)
- Verlängerung der Wartungsintervalle (hervorgerufen durch, an die Nutzungsdauer angepassten Instandsetzungszeitpunkt aufgrund der Gedächtnisfunktionalität
- Senkung der Wartungs- und Reparaturkosten
- maximale Nutzung der Bauteil-Lebenszyklen (Gedächtnisfunktionalität)

### Einleitung

Eine wesentliche Voraussetzung für den vollautomatischen und ununterbrochenen Betrieb von Werkzeugmaschinen, wie z. B. von Flexiblen Fertigungssystemen (Mehrmaschinensysteme) zur Bauteilherstellung, ist die reibungslose Versorgung der Maschinen mit Werkzeugen. Die Werkzeuge müssen nach einer gewissen Standzeit (aufgrund von Verschleiß: bedingt durch den Bearbeitungsprozess tritt am Werkzeug Verschleiß auf) und beim Wechsel eines Werkstückes, das einen anderen Werkzeugbedarf hat, ausgetauscht werden.

Nachdem der Bearbeitungsvorgang selbst durch automatische Steuerungen erheblich verkürzt werden konnte, rückt zwangsläufig die Reduzierung der Nebennutzungszeiten in den Vordergrund. In diesem Zusammenhang richten sich die Automatisierungsbestrebungen auch auf den Werkzeugfluss. Der Werkzeugfluss lässt sich in zwei Teilbereiche zerlegen. Der maschinennahe Bereich beschränkt sich auf das unmittelbare Umfeld des einzelnen Bearbeitungssystems, während der maschinenferne Bereich zusätzlich die im Werkzeugfluss vor- und nachgelagerten Stationen einschließt

Der Gegenstand der Automatisierung im Maschinennahbereich ist der Werkzeugwechsel, der die automatische Beschickung des Bearbeitungssystems mit den für die Bearbeitung eines oder mehrerer Werkstücke benötigten Werkzeugen sowie die Rückführung nicht mehr benötigter Werkzeuge in eine maschinennahe Speichereinrichtung umfasst.
Die Automatisierung des maschinenfernen Bereichs beinhaltet die automatisierte Bestückung der maschinennahen Speichereinrichtung (das Werkzeugmagazins einer Werkzeugmaschine) mit Werkstücken.

Während moderne Werkzeugmaschinen in der Regel über einen automatischen Werkzeugwechsel verfügen, ist ein automatisierter Werkzeugtransport, bei welchem z. B. der Werkzeugaustausch, die Werkzeugvoreinstellung und die Kommissionierung von Werkzeugsätzen in das Automatisierungskonzept - und damit in das Prozessleitsystem - einbezogen wird, gegenwärtig eher seltener realisiert.

Neue Technologien im Umfeld von "Industrie 4.0" bieten verstärkte Möglichkeiten einer dezentralen Informationsverarbeitung, die beispielsweise eine selbsttätige Koordinierung der relevanten technischen Abläufe des Werkzeugflusses dezentral vom zentralen Prozessleitsystem ermöglicht. Diese Abläufe müssten dann nicht alle in das Automatisierungskonzept, und damit in das Prozessleitsystem, vollständig einbezogen werden.

### Besonderheiten und Stand der Technik

### Stand der Technik - Nachteile bisheriger Lösungen:

Nachfolgend soll der Stand der Technik am Bsp. des Kaltwalzens von Bandstahl aufgezeigt werden.

Um den Qualitätsansprüchen gerecht zu werden, müssen die Arbeitswalzen entsprechend dem zu walzenden Blech ausgewählt werden. Hierzu muss bei einem Walzenwechsel die optimale Kombination der verfügbaren Arbeitswalzen eingesetzt werden. Der Einsatz von Ausschusswalzen muss dabei verhindert werden

### Der Ist-Prozess hierzu ist:

- Arbeitswalzen werden nach dem Einsatz im Walzgerüst in der Walzenschleiferei nachbearbeitet.
- Nach der Aufbereitung wird die Walze mit Durchmesserangaben in einer Kassette gelagert.
- Die Kassetten können auf Regalen, Tischen und Bodenstellplätzen sowohl in der Schleiferei als auch am Walzgerüst eingelagert werden.
- Der Mitarbeiter kennt die Lagerplätze der verfügbaren Walzen nicht.
- Der Mitarbeiter stellt die optimale Kombination von zwei, in der direkten Nähe befindlichen Walzen zusammen.

Die Führung der Bestände an benötigten Werkzeugkomponenten (hier im Beispiel die Arbeitswalzen) im Lager wird in der Regel manuell über handschriftliche Listen verwaltet. Diese Vorgehensweise einer manuellen Bestandsführung ist zu umständlich und sehr zeitaufwendig.
Die Protokollierung aller Lagerbewegungen und die daraus resultierenden geänderten Lageplätze für die Werkzeuge ist mit handschriftlicher Aufzeichnung äußerst schwierig zu dokumentieren. Zudem ist die Fähigkeit, mit einer hohen Teilevielfalt umzugehen sehr begrenzt. Ein schnelles, gezieltes Auffinden von Werkzeugen wird ebenfalls erschwert.
Problematisch an dieser papierbasierten Vorgehensweise ist, dass im Umfeld der Walzanlagen Papierdokumente schnell unleserlich werden, aufgrund von z. B. Dreck und Öl.

Neuere Ansätze unter Nutzung von Auto ID-Techniken, wie beispielweise von Balkencode, (Barcode), DataMatrix-Code (QR-Codes) oder von konventionellen RFID-Techniken ("RFID 1.0" = automatische Identifizieren von Objekten) wurden verschiedentlich angewendet.
Ihr produktiver Einsatz ist jedoch aufgrund der extremen Produktionsbedingungen (hohe Temperaturen, hohe mechanische Beanspruchung - Stöße, Vibrationen sowie Stäube, Dämpfe und Wasser oder Öle) sehr eingeschränkt oder gar nicht möglich.

Zur detaillierten Aufzeichnung aller Bewegungs- und Instandhaltungsdaten der Werkzeuge reichen diese Auto-ID-Technologien alleine nicht aus. Hierzu muss eine entsprechende Kommunikation der Werkzeugdaten zwischen verschiedenen DV-gestützten Systemen, wie z. B. Werkzeug-Management-Software (WMS), die Integration mit dem System für die Produktionsplanung und -steuerung (PPS) oder mit dem System für Materialbedarfs- und Ressourcenplanung (ERP-System) erfolgen. Dazu sind Datenbanken, Netzwerken und Server erforderlich (komplexe IT-Infrastruktur).

Solche Systeme weisen aber einen hohen Einführungsaufwand auf (standardmäßig relativ hoher Investitionsaufwand), mit langer Einführungszeit, und führen häufig auch zu Akzeptanzproblemen der betroffenen Mitarbeiter in der Werkstatt oder Produktion, so dass die Auto-ID Systeme in Kombination mit DV-Lösungen aus wirtschaftlichen und / oder organisatorischen Gründen sich nicht durchgesetzt haben.

Die internationale Patentanmeldung WO 2010/057656 A1 offenbart eine Anlage der Hütten- oder Walzwerksindustrie, welche Werkzeuge in Form von z. B. Roheisen- oder Stahlwerkspfannen oder Stranggießkokillenumfasst, wobei diese Werkzeuge mit RFID-Chips ausgestattet sind. Die RFID-Chips umfassen dabei Schreib- und Leseeinheiten und auf den Chips sind Informationen bezüglich des einzelnen Werkzeugs, wie dessen bisherige Einsatzzeiten, Informationen über seinen Ort, bisherige Einsatzparameter oder durchgeführte Wartungsarbeiten etc. gespeichert. Somit lassen sich drahtlos aktiv Eigenschaften der einzelnen Werkzeuge auch zwischen verschiedenen Stationen verfolgen, womit schlussendlich Arbeitsabläufe effizienter gestaltet werden können.

Die Zeitschrift ABB: "Connecting the world - Industry 4.0", zu finden im Internet (URL:http://new.abb.com/docs/librariesprovider20/Contact-magazine/contact_middle-east-industry-4-0-dec2014.pdf) offenbart, dass bei "Industrie 4.0" sensorbestückte "smart products" Maschinen mitteilen, wie diese gesteuert werden sollen und sich Prozesse selbst in einer dezentralen Weise steuern und eingebundene Geräte drahtlos miteinander kommunizieren. In dieser Zeitschrift wird dieses System weiter für eine Bergbauanlage diskutiert und offenbart, dass damit eine Kostenreduktion und eine erhöhte Effizienz des Produktionsprozesses erreicht wird.

In DFKI: "DFKI auf der CeBIT 2015, Smart Factory-Smart Data-Smart Services, digisign-Gewinner beim CeBIT Award", News Deutsches Forschungszentrum für künstliche Intelligenz, Nr. 35, März 2015, ISSN: 2196-2251 findet sich eine gleichartige Offenbarung konkret auch mit Bezug zur Stahlindustrie, siehe Projekt "iProdict" mit der Saarstahl AG zur Produktionsüberwachung.

"Advanced planning and control of manufacturing processes in steel industry through big data analytics: Case study and architecture proposal" 2014 IEEE International Conferece on Big Data (Big Data); IEEE, 27. Oktober 2014 (2014-10-27), Seiten 16-24, XP032717191, DOI: 10.1109/BIGDATA.2014.7004408 bezieht sich auch wieder auf eine Anwendung bei der Saarstahl AG und dort auf die Verwendung von "Big Data" zur Prozessplanung, wobei hier das System konkret auch dazu verwendet wird, flexibel den Produktionsablauf für verschiedene Kundenaufträge zu gestalten.

"Cyber Physical Production Systems: Ohne Sensorik keine Industrie 4.0", ITG/GMA Fachtagung Nürnberg, 04.06.2014, zu finden im Internet: URL:http://spectronet.de/story_docs/vortraege_2014/140603_sensor_test/140604_S chmitt_rwth_aachen.pdf stellt zunächst direkt den Bezug zwischen Cyber-physikalischen Systemen und "Industrie 4.0" her. Auf Seite 5 werden diese als dezentrale Systeme, die sowohl untereinander als auch über das Internet der Dinge miteinander verbunden sind, weiter charakterisiert. Dort wird weiter ausgeführt, wie über entsprechende Modelle die Prozesse zu steuern sind. Auf Seite 15 ist dann auch explizit offenbart, dass "Industrie 4.0" zukünftig zu autonomen Verhandlungsmechanismen der Komponenten und damit zur optimierten Ausnutzung der Anlagenkapazität führt.

Welt N24: "Vernetzte Strukturen und das Ende der Ineffizienz", Stahl Report Industrie 4.0, 12.11.2015, zu finden im Internet: URL:HTTPS://www.welt.de/148736402 offenbart allgemein die Einführung von "Industrie 4.0" bei ThyssenKrupp Steel und dabei die Verwendung Cyber-physikalische Systeme, die sich selbst organisieren und flexibel auf neue Anforderungen reagieren. Auch bedeutet laut D6 die "Industrie 4.0" die logische Fortsetzung der bisher schon bestehenden Regelungsprozesse und deren konsequente Anwendung das Ende der Ineffiezienz.

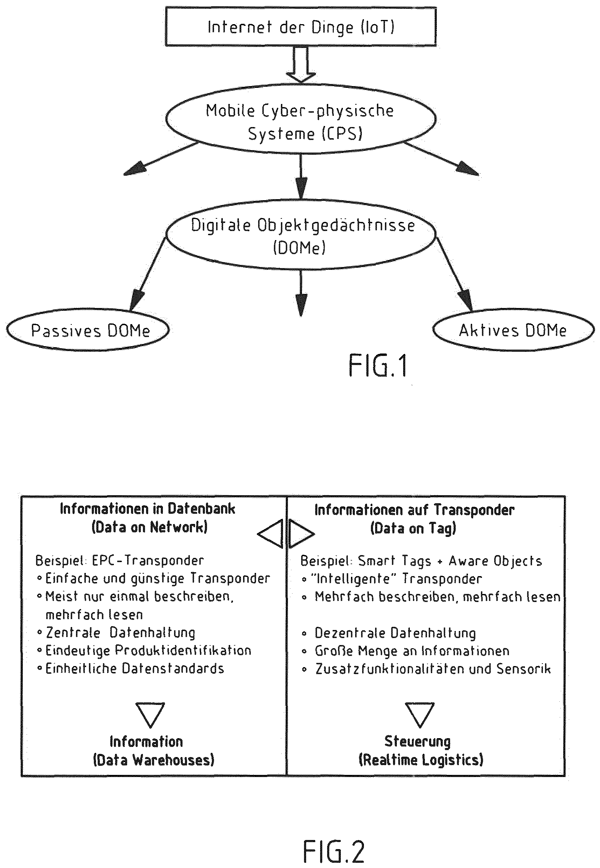

"Ubiquitous Monitoring for Industrial Cyber-Phasical Systems over relay-assisted wireless sensor networks", IEEE Transactions on emerging topics in computing, Aband 3, Nr. 3, 4.09.2015 offenbart schließlich ein sich selbst organisierendes System gemäß "Industrie 4.0", wobei gemäß Abbildungen 2 und 4 sowie dem Kapitel IV konkret ein Warmwalzprozess durch ein drahtloses Sensornetzwerk auf Basis von cyber-physikalischen Systemen offenbart wird, die Sensoren aber nicht direkt am Werkzeug installiert sind.

### Formuliertes Ziel

*(Was genau soll verbessert werden ? Was wird durch die Erfindung erreicht ? Welches Problem muss gelöst werden ?)*

Der Erfindung liegt die Aufgabe zugrunde, manuelle Bestandsführungen von Werkzeugen bzw. der Werkzeugverwaltung für Maschinen innerhalb von Anlagen der Hütten- und Walzwerkindustrie sowie der Schmiede- und Rohrindustrie, durch spezielle, mobile Datenerfassung unter Nutzung von Industrie 4.0-Technologien zu ersetzen.

Das Ziel ist, beim Werkzeugwechsel die optimale Werkzeugauswahl für die jeweils aktuelle Fertigungsaufgabe (zu bewältigende Gieß- oder Walzaufgabe) zu finden und einzusetzen.
Beim Stranggießen bedeutet dies, die optimale Auswahl und Kombination der Kokillenkomponenten (Werkzeugeinzelteile) bzw. den daraus zusammengebauten Werkzeug, der Stranggieß-Kokille, auszuwählen und aufzufinden. Beim Walzenwechsel bedeutet dies, die optimale Kombination der verfügbaren Arbeitswalzen zu finden und einzusetzen.
Dabei muss der Einsatz von Ausschusswerkzeugen (Walzen, Kokillen, etc.) verhindert werden.
Des Weiteren soll eine Verfolgung über den Lebenszyklus der Werkzeuge ermöglicht werden ("Digitaler Lebenslaufkarte"), um beispielsweise Nachbearbeitungsergebnisse und Einsatzzeiten der Werkzeuge eindeutig zuzuordnen

Einzelziele sind dabei:
- Werkzeuge lassen sich schneller und effektiver lokal finden ("Finden statt Suchen")
- fehlerkritische Werkzeuge können schnell identifiziert werden
- Übersicht über die verfügbaren Werkzeugen und deren Dimensionen
- Abgleich voraussichtlicher Produktion mit verfügbaren Werkzeugen
- Einkauf neuer Werkzeuge gemäß des Abgleichs

### Lösung

(Wie wird die Lösung erreicht ? Welche Mittel benötigt man dazu ? Wie werden diese kombiniert ?)

Erfindungsgemäß wird die Aufgabe dadurch gelöst, dass die Möglichkeiten neuster Industrie 4.0-Technologien, wie cyber-physische Systemen (CPS) und den, in der CPS enthaltenen digitalen Objektgedächtnissen (Digital Object Memory, DOM) eingesetzt und die Echtzeit-CPS-Daten mit Mobilgeräten kombiniert werden.

Bei CPS handelt es sich um einen Verbund von Komponenten, die aus mechanischen und elektronischen Teilen bestehen, die die physischen Objekte, wie beispielsweise Maschinenbauteile, mit Sensorik und Verarbeitungskapazität ausstatten. Diese eingebetteten Softwaresysteme besitzen eine Internetadresse. Damit werden, als CPS-ausgeführte Betriebsmittel kommunikationsfähig und können flexibel vernetzt werden.

Die Erfindung umfasst ein cyber-physisches Werkzeugverfolgungs- und Werkzeugverwaltungssystem mit, an den Werkzeugen bzw. Werkzeugkomponenten integrierten kommunikationsfähigen Sensoren zur Generierung von Betriebs- und Zustandsdaten, wie Orte- und Lageveränderungen) und Zustandserfassung (Demontiert, Nachbearbeitet, Standzeitkontrolle, ...) der Werkzeuge.

Eine Taxonomie von Digitalen Objektgedächtnissen nach Wahlster-2013 ist in Figur 1 dargestellt.

Erfindungsgemäß kann dies beispielsweise RFID Tags mit hoher Speicherkapazität sein, welche dann das digitale Objektgedächtnis (DOM) bilden, sowie deren Weiterentwicklungen, wie aktive digitale Objektgedächtnisse (Active Digital Object Memory, ADOM), die über integrierte Computerverfügen und neben der Speicherung von Daten auch weitere Funktionen wie etwa Standortverfolgung oder Zustandsüberwachung erlauben.

In der nachfolgenden Abbildung wird die klassische RFID-Technologie (reine Auto-ID Funktion) mit aktuellen Weitentwicklungen der RFID-Technologie mit digitalen Produktgedächnis (RFID-Smart-Labels, ...), vereinfacht sollen diese neuen Entwicklungsgenerationen als RFID 2.0 bezeichnet werden, am Beispiel von Logistik-Anwendungen (Warenwirtschaft) gegenübergestellt.

Eine Gegenüberstellung der wichtigsten Unterschiede zwischen klassischer RFID-Technologie (reine Auto-ID Funktion) und neuen RFID Generationen (nach 2005-Informationsforum RFID_Basiswissen_RFID-data) ist in Figur 2 gezeigt.

Die Werkzeuge werden mit einem RFID-Smart-Labels mit hoher Speicherkapazität oder einem eingebetteten Controller (CPS-Werkzeug) ausgezeichnet und damit als "intelligentes Wechselteil" ausgeführt. Im Folgenden soll zur Vereinfachung die Begriffe "intelligentes Wechselteil" und "CPS-Werkzeug" gleichbedeutend verwendet werden.
Dieses "Smart Label" bzw. der Controller dient zunächst zur Identifizierung des physikalisches Objekt (die ID-des CPS-Werkzeugs), wie bei den bisherigen, konventionellen Auto-ID-Systemen (eindeutige und maschinell lesbar Kennzeichnung). Darüber hinaus wird das CPS-Werkzeug mit einem digitalen Gedächtnis sowie mit Sensoren ausgerüstet.
In diesem Gedächtnis werden statische und dynamische Informationen bezüglich dieses Werkzeuges festgehalten. Die CPS-Werkzeuge können als sensorische CPS (passiv) oder aktorische CPS (aktiv) ausgeführt werden. So fungiert das erfindungsgemäße CPS-Werkzeug als Beobachter: Das Produkt beobachtet sich und seine Umgebung und kann so seinen individuellen Zustand bestimmen und vorgeben welches Werkzeug das geeignete für die nächste Bearbeitungsaufgabe ist. Darüber hinaus können folgende Zustände abgebildet werden:
- Das CPS-Werkzeug als Akteur: Das intelligente Werkzeug beeinflusst seine Umgebung: beispielsweise Nachbestellung von Werkzeug (Z.B. werksinterne Anforderung an das Materiallager)
- Das CPS-Werkzeug als Informationsträger: Das intelligente Werkzeug trägt Informationen über den aktuellen Lagerort, seine Bearbeitungshistorie und der Reststandzeit. Es ermöglicht somit einen Abgleich mit der Produktionsplanung

Die vernetzten Werkzeuge kommunizieren beispielweise mit einem werkseigenen WLAN mit der Werkzeugverwaltung (Tool-Management-Cockpit), einer Softwareapplikation zur Planung und Steuerung auf einem mobilen Endgerät oder mit der entsprechenden, mit Cyber-Physikalischen-Systeme (CPS) ausgerüstete Maschinen (social maschines), in welcher ein Einbau möglich ist, sowie mit anderen CPS-Werkzeugen und mit dem Prozessleitsystem.

Ferner werden weitere CPS-Technologien eingesetzt, wie z. B. die erwähnte RFID-Technik sowie drahtlose Sensor-Technik (wireless Sensor Networks) und Echtzeitlokalisierungssysteme (RFID-Technologie und andere Trackingverfahren).

Die "smart Labels" bzw. die Controller werden dabei als lösbare Verbindung zwischen z. B. dem RFID-Transponder und Werkzeug ausgeführt, um u. U. nach dem Ende des Werkzeuglebenszyklus einen mehrfachen Einsatz zu Ermöglichen.

Des Weiteren können auch Cloud-basierte Lösungen zum Einsatz kommen. Die Datenverarbeitung bei der beschriebenen "Data on Tag" (verschiedentlich auch als "on-product"-Fall bezeichnet), vgl. Abbildung, kann erfindungsgemäß optional verteilt werden, auf:
a) Das Wissen beziehungsweise die Intelligenz des Systems liegt dabei nicht im Transponder, sondern ausschließlich in den Datenbanken ("Data on Network");
b) Bei diesen Anwendungen müssen die Lesegeräte nicht mit Datenbanken verbunden sein. Stattdessen ist eine dezentrale Verwaltung und Steuerung möglich;
c) Das Wissen beziehungsweise die Intelligenz des Systems liegt dabei zum Teil im Transponder, andere Teile liegen in den Datenbanken (Cloud- und Serverbasiert).

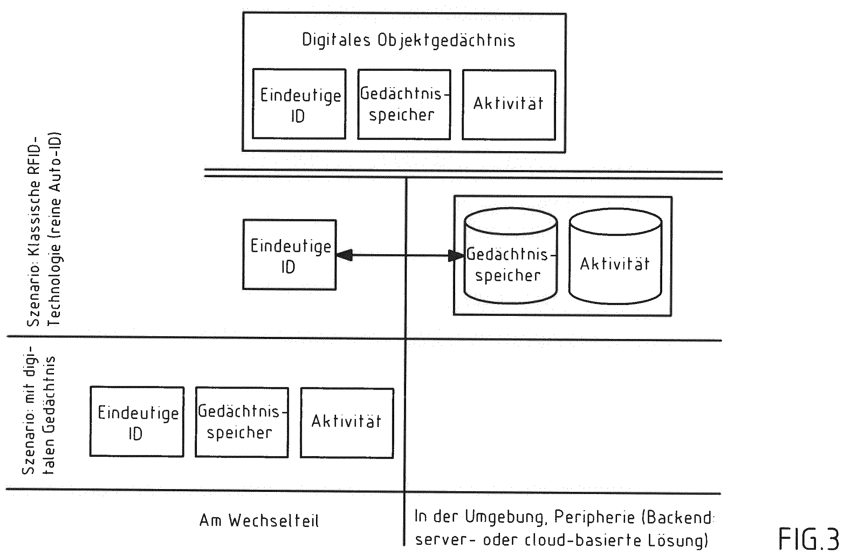

Eine Optionen der verteilten Datenverarbeitung innerhalb von intelligenten Wechselteilen (mit DOM) sowie eine Zuordnung zu prinzipiellen Anwendungsszenarien ist in Figur 3 gezeigt.

Die Option (a) wird hier nur der Vollständigkeit genannt und ist nicht Gegenstand der Erfindung. Die Option (c) stellt eine Kombination der beiden Möglichkeiten (a), (b) dar, d. h. bestimmte Aktivitäten (Datenverarbeitung) findet z. B. auf dem eingebetteten Controller statt, andere werden innerhalb der Cloud bearbeitet, z. B. bei rechenzeitintensiveren Anwendungen.

Beispielsweise beinhaltet die Datenbearbeitung bei (b) und (c) zusätzlich ein Modell des Wechselteils (z. B. einer Kupfer-Kokille), welches Prozessgrößen bei dem Produktionsprozess beobachtet (Sollwerte und Überschreitung von Grenzwerten, Anzahl der Grenzüberschreiter, etc.) zur Zustandsüberwachung des intelligenten Wechselteils oder zur Überwachung des Prozesses (der Produktion, als auch des Bearbeitungsprozesses bei der Instandhaltungsmaßnahme) durchführt. Beispielsweise bekommt die eingesetzte Kupferplatte bei jeder Gießfolge ihre erfahrene Temperaturbelastung und gegossene Tonnage bei ihrem Produktionseinsatz mitgeteilt bzw. auf der CPS oder smart Label gespeichert (Historie beim Gießvorgang: "Digitaler Lebenslauf"). Diese Informationen ermöglichen die Beurteilung des Risswachstums in der Kokillenkupferplatte. Das Risswachstum im Kuper ist neben der Tonnage das Entscheidungskriterium zur Überarbeitung der Kupferplatten. Hier erfolgt der Wechsel von einer mehr subjektiven Instandsetzung nach visueller Prüfung (abhängig von dem persönlichen Erfahrungen und der "Tagesform") hin zur softwareunterstützen Präventiven Wartung mit einhergehender Verlängerung der Lebensdauer.

Ferner könnten Verfahren zur Systemidentifizierung (z. B. die Hauptkomponentenanalyse oder andere statistische Verfahren) angewendet werden. Des Weiteren können mathematische Optimierungsverfahren zum Werkzeugmanagement (z. B. Optimierungen mit Straffunktion; Penalty-Funktion, Entwicklung von Werkzeugwechselstrategien) eingesetzt werden, die ebenfalls rechenzeitintensiv sein können. Beispielsweise beim Wechsel der Stahlqualitäten innerhalb des Stranggießverfahrens, müssen die Mischzonen zwischen den einzelnen Stahlgüten innerhalb einer Gießabfolge (Sequenz) betrachtet werden können, sowie deren Verwertbarkeit.

Erfindungsgemäß wird ebenfalls eine produktionsbegleitende Simulation des Werkzeugeinsatzes als Prognose-System für eine vorausschauende Produktionsplanung ermöglicht (wie sieht die Produktionssituation bis zum nächsten Umrüstvorgang aus, oder bis zum Schichtende). Hierzu ist ein entsprechendes Simulationsmodell (z. B. mittels ereignisdiskreter Simulationsverfahren) zu verwenden, sowie eine Schnittstelle zu den entsprechenden Automatisierungsrechnern und den Produktionsplanungs- und - steuerungsrechnern (PPS-, ERP-Systeme) zu schaffen. Diese Simulation stellt sicher, dass alle innerhalb der nächsten Gießfolge zu vergießenden Stahlgüten mit der gewählten Kokille auch die geforderte Produktqualität erreichen.

### Konkretes Betriebsbeispiel - Gießbetrieb auf einer Stahlstrang-Dünnbrammengießanlage

Das formgebende Werkzeug beim Gießen (Urformung) von Stahl-Halbzeugen, wie Dünnbrammen, ist die Stranggusskokille. Der Formhohlraum für den gewünschten Dünnbrammenquerschnitt wird von zwei Breitseitenwänden und zwei verstellbaren Schmalseitenwänden gebildet. Das Komplett-Werkzeug "Stranggieß-Kokille" setzt sich somit im Wesentlichen aus den folgenden Kokillenkomponenten (Werkzeugeinzelteile) zusammen: Kupferplatte (Breit- und Schmalseite), Wasserkasten (für Breit- und Schmalseite) sowie den Kokillenrahmen. Ggf. gehören auch Messsensoren (Thermoelemente, ...) dazu.

Die Kupferplatten der Kokillen verschleißen aufgrund der hohen thermischen und mechanischen Beanspruchung durch den Gießprozess besonders stark, und müssen daher periodisch ersetzt und nachbearbeitet werden. Des Weiteren muss je nach Gießformat, Legierung und weiteren Qualitätsmerkmalen der zu gießende Dünnbramme die Kokille gewechselt werden (Umrüsten bei Produktwechsel).

Die beteiligten Orte (Kokillenstandorte) dabei sind:
- die Gießanlage selbst
- Stellplatz an der Gießanlage für eine Kokille je Gießstrang (für den nächsten planmäßigen Kokillenwechsel)
- Kokillenbereitstellungshalle in der die Kupferplatten mit montierten Wasserkästen in die Kokillenrahmen eingesetzt werden
- Kokillenwerkstatt (mechanische Werkstatt) in der Kupferplatten überarbeitet werden und Kupferplatten auf Wasserkästen aufgezogen werden

Der betriebliche Ablauf beim Einsatz von Kokillen in einer Stranggießanlage und die gegebenen Abhängigkeiten und Rahmenbedingungen werden nachfolgend strichwortartig aufgeführt.
- Gießen mit 3 Wochen Standzeit je Einsatzzeitraum der Kokille in der Gießanlage; Austausch erfolgt nach: Tonnage, Inspektion oder Defekt sowie Risstiefe in der Kupferoberfläche der Kokillenplatte
- 10 mm Verschleißschicht bei einer neuen Kokillenplatte, je Instandsetzung der Kupferplatte wird 1mm von der Nutzschicht entfernt
- Je nach gewünschter Gießbreite sind breite und schmale Austausch-Kokillen (AT) bereit halten (wegen Begrenzung der Schmalseitenverstellung durch den Spindelweg)
- Je nach Gießaufgabe (zu gießender Werkstoff und zu gießendes Produktformat) bestehen unterschiedliche technologische Restriktionen bei der Kokillenauswahl (Materialdicke, Art der Beschichtung, etc.), z. B.:
   - für risskritische Güten werden nur Kupferplatten verwendet, die eine Mindest-Restwandstärke von hRest1Cu,min besitzen
   - für Güten die durch Kupferaufnahme zu Sternchenrissen neigen, werden besonders beschichtete Kupferplatten verwendet
   - für besonders schnell vergossene Stahlgüten werden ggf. keine beschichteten Kupferplatten verwendet
- Ursachen für den Austausch der in der Gießanlage befindlichen Gießkokille gegen eine Austauschkokille (neue Baugruppe): Undichtigkeit der Kupferplatte auf dem Wasserkasten, das Getriebe der Schmalseitenverstellung ist defekt oder das Kupfer der Kokillenplatten ist verschließen bzw. die Risstiefe in der Kokillenplatte hat ein kritisches Maß erreicht.
- Maßnahmen sind z. B. bei einer defekten Schmalseite (Kupferplatte mit Wasserkasten) wird diese in der Kokillenbereitstellungshalle bei der Gießanlage aus dem Kokillenrahmen entnommen und zur mechanischen Werkstatt geschickt
- Es wird in dem verbliebenen Kokillenrahmen eine neue/überarbeitete (instandgesetzte Schmalseitenbaugruppe eingesetzt
- Somit wird die in der Bereitstellungshalle komplettierte Kokille zur AT-Kokille und steht bei der Gießanlage als AT-Kokille auf der Gießbühne
- Folge eines Defektes: Bei der Ursprungskokille wird das defekte Teil entnommen und gegen ein Reserveteil Ausgetauscht → ein Wasserkasten (Nummer) wird über seine Lebensdauer immer mit neuen, wechselnden Kokillenplatten (Nummern) bestückt.
- Der Kokillenkreislauf zwischen Gießanlage, Kokillenbereitstellungshalle und der weiter entfernten Kokillenwerkstatt setzt sich aus den Kreisläufen der Bauteile: x- Kokillenrahmen, y-Sätze Wasserkästen und z- Sätze Kupferplatten zusammen
- Logistik: Restlebenszeit der Kupferplatten und für Gießplan geeignete Restwandstärke
- Stand der Technik: papierbasiertes Verwaltungssystem wird von Instandhalter, Metallurge und Mechanische Werkstatt genutzt oder durch Handeingabe in ein Datenbanksystem gepflegt. Eigene Erfahrungen zeigen papierbasierte oder durch Handeingabe betrieben Systeme weisen ca. 5% Falscheingaben auf.
- An- und Abmeldung in der mechanischen Werkstatt erfolgt auf Zuruf
- Mechanische Kokillenwerkstatt mit einer Durchlaufzeit von 4 bis 6 Wochen je Überarbeitung. Der Ablauf dabei ist: Reinigung und Demontage des Wasserkastens - Fräsen der Kupferplatten - Nickelbeschichtung im Bad falls erforderlich (Dauer ca. 2 Wochen) - Fräsen der aufgewickelten Oberfläche - Montage Wasserkasten auf Kupferplatten und Abdrücken der Baugruppe
- Markierte Teile im Beispiel sind: Kupferplatte, Wasserkasten und Kokillenrahmen mittels Schlagzahl markiert.
   1. Anwendung für die Werkzeuge: a) allgemein → s. Abschnitt "formuliertes Ziel" (b) konkret: Kokillen, Walzen, Richtrollen, Scherenmesser, ...
   2. Anwendung für ortsveränderliche Betriebsmittel in Hütten- und Walzwerken, wie z. B. metallurgischen Gefäßen (Gießpfannen, ...), Schleppern, ... sowie innerhalb der Oberflächentechnik, z. B. Gefäße für Verzinnung,
   3. Schnittstelle für produktionsbegleitende Simulation ACHTUNG: die gilt auch für klassische RFID 1.0 Typen.

## Patentansprüche

1. Anlage der Hütten-, Walzwerks-, Schmiede- oder Rohrindustrie aufweisend:
Werkzeuge
**dadurch gekennzeichnet,**
**dass** die Werkzeuge als Cyber-Physikalische-Systeme CPS-Werkzeuge ausgebildet sind und jeweils entweder einen eingebetteten Controller oder ein RFID-Smart-Label mit hoher Speicherkapazität aufweisen, wobei das RFID-Smart-Label ein digitales Objektgedächtnis oder ein aktives digitales Objektgedächtnis mit einem integrierten Computer ausbildet;
**dass** die CPS-Werkzeuge miteinander vernetzt sind;und dass die CPS-Werkzeuge als Beobachter ausgebildet sind zum Beobachten von sich und seiner Umgebung, um so seinen individuellen Zustand zu bestimmen und vorzugeben, welches Werkzeug das Geeignete für die Bearbeitungsaufgabe ist.

2. Anlage nach Anspruch 1,
**dadurch gekennzeichnet,**
**dass** die vernetzten CPS-Werkzeuge ausgebildet sind, per drahtloser Kommunikation, beispielsweise über ein werkseigenes WLAN oder über RFID-Technik oder über drahtlose Sensor-Technik mit einer Werkzeugverwaltung, mit mobilen Endgeräten, mit einem Prozessleitsystem, mit anderen CPS-Werkzeugen und/oder mit CPS-Maschinen zu kommunizieren.

3. Anlage nach einem der vorangegangenen Ansprüche,
**dadurch gekennzeichnet,**
**dass** die RFID-Smart-Labels oder die eingebetteten Controller lösbar mit den Werkzeugen verbunden sind.

4. Anlage nach einem der vorangegangenen Ansprüche,
**dadurch gekennzeichnet,**
**dass** die CPS-Werkzeuge als Akteure ausgebildet sind zum Ausgeben von werksinternen Anforderungen an ein Materiallager

5. Anlage nach einem der vorangegangenen Ansprüche,
**dadurch gekennzeichnet,**
**dass** die CPS-Werkzeuge als Informationsträger ausgebildet sind und Informationen über den aktuellen Lagerort des Werkzeugs, die Bearbeitungshistorie und über die Reststandzeit des Werkzeugs trägt.

6. Anlage nach einem der vorangegangenen Ansprüche,
**dadurch gekennzeichnet,**
**dass** die CPS-Werkzeuge ein digitales Gedächtnis aufweisen zum Festhalten von statischen und dynamischen Informationen bezüglich des Werkezugs; und dass die CPS-Werkzeuge Sensoren aufweisen zur Generierung von Betriebs- und Zustandsdaten der Werkzeuge.

7. Anlage nach einem der vorangegangenen Ansprüche,
**dadurch gekennzeichnet,**
**dass** das RFID-Smart-Label oder der eingebettete Controller ausgebildet ist zur Identifizierung des Werkzeugs, dem es zugeordnet ist, durch eine eindeutige maschinenlesbare Kennzeichnung.

8. Anlage nach einem der vorangegangenen Ansprüche,
**gekennzeichnet durch**
ein Simulationsmodell als Prognosesystem für eine vorausschauende Produktionsplanung mit Schnittstellen zu Automatisierungsrechnern und zu Produktionsplanungsrechnern und zu Produktionssteuerungsrechnern.

9. Anlage nach einem der vorangegangenen Ansprüchen,
**gekennzeichnet durch**,
ein Modell des Werkzeugs als intelligentes Wechselteil, welches Prozessgrößen bei dem Produktionsprozess beobachtet zur Zustandsüberwachung des Wechselteils oder zur Überwachung des Produktionsprozesses oder des Bearbeitungsprozesses bei der Instandhaltungsmaßnahme.

10. Anlage nach Anspruch 8 oder 9,
**dadurch gekennzeichnet,**
**dass** die für das Simulationsmodell oder das Modell des Wechselteils erforderliche Software bzw. Teile der Software in dem eingebetteten Controller, innerhalb einer Cloud oder in dem aktiven digitalen Objektgedächtnis gespeichert oder geladen ist/sind.

11. Anlage nach einem der vorangegangenen Ansprüche,
**dadurch gekennzeichnet,**
**dass** es sich bei der Anlage um eine Gießanlage und bei dem Werkzeug um eine Kokille mit Kokillenplatten handelt.

12. Anlage nach einem der Ansprüche 1 bis 10,
**dadurch gekennzeichnet,**
**dass** es sich bei der Anlage um eine Anlage in einem Walzwerk, zum Beispiel eine Walzanlage oder eine Bandbehandlungsanlage, und bei dem Werkzeug um Walzen mit oder ohne Kassetten oder um Richtrollen oder Scherenmesser handelt.

13. Verfahren zum Betreiben einer Gießanlage nach Anspruch 11,
aufweisend folgende Schritte:
Für die Kokillenplatte: Speichern der bei jeder Gießfolge erfahrenen Temperaturbelastung und der bei ihrem Produktionseinsatz gegossenen Tonnage auf dem RFID-Smart-Label oder in dem eingebetteten Controller.

14. Verfahren zum Betreiben einer Anlage nach einem der Ansprüche 1 bis 12, **dadurch gekennzeichnet,**
**dass** eine produktionsbegleitende Simulation des Einsatzes eines Werkzeugs mit Hilfe eines Simulationsmodells als Prognosesystem für eine vorausschauende Produktionsplanung erfolgt.

15. Verfahren nach Anspruch 14,
**dadurch gekennzeichnet,**
**dass** die für das Simulationsmodell erforderliche Software bzw. Teile der Software in dem eingebetteten Controller, innerhalb einer Cloud oder in dem aktiven digitalen Objektgedächtnis abläuft / ablaufen.

## Claims

1. Plant of the metallurgical, rolling-mill, forging or pipe industry, comprising:
tools,
**characterised in that**
the tools are realised as cyber-physical system (CPS) tools and each comprise either an embedded controller or an RFID smart label with high memory capacity, wherein the RFID smart label forms a digital object memory or an active digital object memory with an integrated computer;
the CPS tools are linked together; and
the CPS tools are constructed as an observer for observation of itself and its environment in order to thus determine its individual state and to predetermine which tool is the suitable one for the work task.

2. Plant according to claim 1, **characterised in that** the linked CPS tools are constructed to communicate with a tool management, with mobile end apparatus, with a process control system, with other CPS tools and/or with CPS machines by wire-free communication, for example by way of a works-individual WLAN or by way of RFID technology or by way of wire-free sensor technology.

3. Plant according to one of the preceding claims, **characterised in that** the RFID smart labels or the embedded controllers are detachably connected with the tools.

4. Plant according to any one of the preceding claims, **characterised in that** the CPS tools are constructed as stakeholders for output of works-internal requirements to a material store.

5. Plant according to any one of the preceding claims, **characterised in that** the CPS tools are constructed as data carriers and carry data by way of which the current positional location of the tool, the work history of the tool and the remaining service life of the tool.

6. Plant according to any one of the preceding claims, **characterised in that** the CPS tools have a digital memory for establishing static and dynamic data with respect to the tool and that the CPS tools comprise sensors for generating operational and status data of the tools.

7. Plant according to any one of the preceding claims, **characterised in that** the RFID smart label or the embedded controller is constructed for identification of the tool, with which it is associated, by a unique machine-readable identification.

8. Plant according to any one of the preceding claims, **characterised by** a simulation model as a prognosis system for predictive production planning with interfaces for automation computers and for production planning computers and for production control computers.

9. Plant according to any one of the preceding claims, **characterised by** a model of the tool as an intelligent interchangeable part, which observes process variables in the production process for status monitoring of the interchangeable part or for monitoring of the production process or of the work process in the case of maintenance measures.

10. Plant according to claim 8 or 9, **characterised in that** the software or parts of software required for the simulation model or the model of the interchangeable part is or are stored or downloaded in the embedded controller, within a cloud or in the active digital object memory.

11. Plant according to any one of the preceding claims, **characterised in that** the plant is a casting plant and the tool is a mould with mould plates.

12. Plant according to any one of claims 1 to 10, **characterised in that** the plant has the form of a plant in a rolling mill, for example a rolling installation or a strip treatment installation, and the tool has the form of rolls - with or without cassettes - or straightening rollers or cutting knives.

13. Method of operating a casting plant according to claim 11, comprising the following steps:
for the mould plate: storing the temperature loading experienced in each casting cycle and the tonnage, which is cast with its production charge, on the RFID smart label or in the embedded controller.

14. Method of operating a plant according to any one of claims 1 to 12, **characterised in that** a production-accompanying simulation of the use of a tool is carried out with the help of a simulation model as prognosis system for a predictive production planning.

15. Method according to claim 14, **characterised in that** the software or part software required for the simulation model is or are executed in the embedded controller, within a cloud or in the active digital object memory.

## Revendications

1. Installation de l'industrie sidérurgique, de l'industrie de laminage, de l'industrie de forgeage des métaux ou de l'industrie de fabrication de tubes, présentant :
des outils de travail
**caractérisée**
**en ce que** les outils de travail sont réalisés sous la forme d'outils de travail de type CPS, autrement dit sous la forme de systèmes cyber-physiques, et présentent respectivement, soit un dispositif de commande intégré, soit une étiquette intelligente d'identification par radiofréquence (RFID) possédant une capacité de stockage élevée ;
dans laquelle l'étiquette intelligente d'identification par radiofréquence est réalisée sous la forme d'une mémoire d'objet numérique ou sous la forme d'une mémoire d'objet numérique active comprenant un ordinateur intégré ;
**en ce que** les outils de travail de type CPS sont mis en réseau les uns avec les autres ; et
**en ce que** les outils de travail de type CPS sont réalisés sous la forme d'un observateur ayant pour objet de se surveiller lui-même ainsi que son environnement, pour de cette manière déterminer son état individuel et spécifier quel l'outil de travail représente l'outil de travail approprié pour la tâche de traitement.

2. Installation selon la revendication 1, **caractérisée en ce que** les outils de travail de type CPS mis en réseau sont réalisés pour communiquer, par l'intermédiaire d'une communication sans fil, par exemple via un réseau local sans fil propre à l'entreprise ou via une technique d'identification par radiofréquence ou par l'intermédiaire d'une technique de détection sans fil, comprenant une gestion des outils de travail, comprenant des équipements mobiles, comprenant un système de contrôle de processus, comprenant d'autres outils de travail de type CPS et/ou comprenant des machines de type CPS.

3. Installation selon l'une quelconque des revendications précédentes, **caractérisée en ce que** l'étiquette intelligente d'identification par radiofréquence ou le dispositif de commande intégré sont reliés de manière amovible aux outils de travail.

4. Installation selon l'une quelconque des revendications précédentes, **caractérisée en ce que** les outils de travail de type CPS sont réalisés sous la forme d'acteurs pour délivrer à un dépôt de matériel des exigences interne à l'atelier.

5. Installation selon l'une quelconque des revendications précédentes, **caractérisée en ce que** les outils de travail de type CPS sont réalisés sous la forme de supports d'informations et transmettent des informations concernant la localisation actuelle du dépôt de l'outil de travail, l'historique de traitement et concernant la durée d'utilisation résiduelle de l'outil de travail.

6. Installation selon l'une quelconque des revendications précédentes, **caractérisée en ce que** les outils de travail de type CPS présentent une mémoire numérique pour la conservation d'informations statiques et dynamiques ; et **en ce que** les outils de travail de type CPS présentent des capteurs destinés à la génération de données concernant le fonctionnement et l'état des outils de travail.

7. Installation selon l'une quelconque des revendications précédentes, **caractérisée en ce que** l'étiquette intelligente d'identification par radiofréquence ou le dispositif de commande intégré est réalisé pour l'identification de l'outil de travail auquel il est attribué, par l'intermédiaire d'une identification univoque qui peut être lue par une machine.

8. Installation selon l'une quelconque des revendications précédentes, **caractérisée par** un modèle de simulation faisant office de système prédictif pour une planification prévisionnelle de la production, comprenant des interfaces avec des ordinateurs d'automatisation et des ordinateurs de planification de production et des ordinateurs de commande de production.

9. Installation selon l'une quelconque des revendications précédentes, **caractérisée par** un modèle de l'outil de travail à titre de pièce interchangeable intelligente, qui observe des données opératoires lors du processus de production pour la surveillance d'état de la pièce interchangeable ou pour la surveillance du processus de production ou du processus de traitement lors de l'opération de maintenance.

10. Installation selon la revendication 8 ou 9, **caractérisé en ce que** le logiciel, respectivement des parties du logiciel, nécessaire(s) pour le modèle de simulation ou pour le modèle de la pièce échangeable est/sont enregistré(es) ou chargé(es) dans le dispositif de commande intégré, au sein d'un cloud ou dans la mémoire d'objet numérique active.

11. Installation selon l'une quelconque des revendications précédentes, **caractérisée en ce que**, en ce qui concerne l'installation, il s'agit d'une installation de coulée et en ce qui concerne l'outil de travail il s'agit d'une lingotière comprenant des plaques de lingotière.

12. Installation selon l'une quelconque des revendications 1 à 10, **caractérisée en ce que**, en ce qui concerne l'installation, il s'agit d'une installation dans un laminoir, par exemple une installation de laminage ou une installation de traitement de bande, et en ce qui concerne l'outil de travail il s'agit de cylindres comprenant ou exempt de cassettes ou encore de cylindres de dressage ou de cisailles.

13. Procédé pour la mise en service d'une installation de coulée selon la revendication 11, présentant les étapes suivantes, à savoir :
pour la plaque de lingotière : la mise en mémoire de la sollicitation de température qu'elle subit lors de chaque épisode de coulée et du tonnage coulé au cours de son cycle de production, sur l'étiquette intelligente d'identification par radiofréquence ou dans le dispositif de commande intégré.

14. Procédé pour la mise en service d'une installation selon l'une quelconque des revendications 1 à 12, **caractérisé en ce que** l'on procède à une simulation accompagnant la production, de la mise en oeuvre d'un outil de travail à l'aide d'un modèle de simulation à titre de système prédictif pour une planification prévisionnelle de la production.

15. Procédé selon la revendication 14, **caractérisé en ce que** les logiciels, respectivement des parties des logiciels, nécessaires pour le modèle de simulation, sont exécutés dans le dispositif de commande intégré, au sein d'un cloud ou dans la mémoire d'objet numérique active.
